# EUROPEAN PATENT SPECIFICATION

(11) **EP 3 021 453 B1**
(45) Date of publication and mention of the grant of the patent: **15.01.2020**
(21) Application number: 14193367.1
(22) Date of filing: 14.11.2014
(51) Int. Cl.: H02J 7/14, B60R 16/03

(54) **Vehicle comprising an electric power supply circuit**
Fahrzeug mit einer Stromversorgungsschaltung
Véhicule équipé d'un circuit d'alimentation électrique

(43) Date of publication of application: 18.05.2016
(73) Proprietor: IVECO FRANCE S.A.S., 69200 Vénissieux (FR)
(72) Inventor: Gendre, Guy Pierre, 69003 LYON (FR)
(74) Representative: Franzolin, Luigi

(56) References cited:
- EP-A2- 2 066 002
- US-A- 3 793 544
- US-A- 4 539 515
- US-A1- 2012 200 242

## Description

### TECHNICAL FIELD OF THE INVENTION

The present invention relates to a vehicle, such as a public transportation bus, comprising an electric power supply circuit of the type including two alternators, as disclosed in documents US4,539,515, US3,793,544 and US2012/200242.

### BACKGROUND ART OF THE INVENTION

Nowadays, in the vehicle field, more and more electric power is demanded for the alimentation of auxiliary or secondary electric loads, such as air conditioning or lighting.

In the electrical alimentation of vehicle field, in particular for transportation vehicles, it is known to use an alternator, driven by the vehicle motor driveshaft, in order to supply an adequate electric power for the auxiliary electric loads. However, depending on the current request, a single alternator must be very powerful, which has bad consequences in terms of volume and cost.

It is therefore preferred to use two or more small alternators connected in parallel. The small alternators induce lower costs and they have lower volumes, so that they can be suitably placed. Moreover, when electrically connected, the alternators are able to supply the adequate electric power.

This approach leads to some technical inconvenients. First, due to costs and volume problems, the alternators can create no more than a 24 volts alimentation circuit. Second, the alternators are not placed in the same thermic environment. This induces the alternators do not deliver the same amount of electric power. In particular, when the electric load request is lower than the maximum electric production of a single alternator, only one alternator supplies electric power at its maximal production point or close to this point while the other alternator does not supply electric power. When the electric load is higher than the maximum single alternator electric production, both alternators supply electric power. This strong imbalance makes the alternators work often at their critical point and creates fire hazards.

### SUMMARY OF THE INVENTION

One object of this invention is to provide a vehicle with an electric power supply circuit where two or more alternators create an alimentation circuit which supplies more than 24 volts without relying on a parallel connection of the alternators and with a better electric power distribution over the auxiliary electric loads.

The invention relates to a vehicle comprising an electric power supply circuit, as defined by the independent claim 1. Particularly, the power supply circuit comprises first and second alternators connected in series by an electric link, which is connected to the vehicle chassis. The first alternator is driven by a motor driven shaft of the engine, which shaft rotates at a first frequency depending on an engine speed. A set of pulleys is mounted between the motor driven shaft and a second alternator shaft such as to drive the second alternator at a different frequency.

According to further aspects of the invention which are advantageous but not compulsory, such an electric power supply circuit might incorporate one or several of the following features taken in any admissible configuration:
- An electric voltage between the negative pole of the second alternator and the positive pole of the first alternator is generated and this electric voltage is the difference of the single electric voltages respectively produced by the two alternators.
- Each alternator supplies an electrical power to the electric load to which it is connected.
- At least one of the two alternators is driven by a motor driven shaft of the vehicle.
- Each alternator creates a 24 volt alimentation circuit.
- The electric power supply circuit is located in an electric network unit.
- The electric network unit is mounted on the chassis by means of an isolating support.
- The first electric load includes one or more auxiliary load circuits such as a light circuit, a turn signal circuit, a windows wiper circuit.
- The second electric load includes one or more auxiliary load circuits such as an air conditioning circuit, an airing circuit, a heating circuit.
- The electric power supply circuit is equipped with two battery sets.

Advantageously, the vehicle is a public transportation vehicle, such as a bus.

### BRIEF DESCRIPTION OF THE DRAWINGS

The present invention and its advantages will be well understood on the basis of the following description, which is given as an illustrative example, without restricting the scope of the invention and in relation with the annexed drawings. In the drawings:
- figure 1 is a schematic representation of a bus including an electric network unit;
- figure 2 is a partial schematic representation of an electric power supply circuit according to the invention included in the electric network unit of figure 1;
- figure 3 is a circuit diagram of the electric power supply circuit of figure 2 according to a first embodiment of the invention;
- figure 4 is a circuit diagram of the electric power supply circuit of figure 2 according to a second embodiment of the invention;

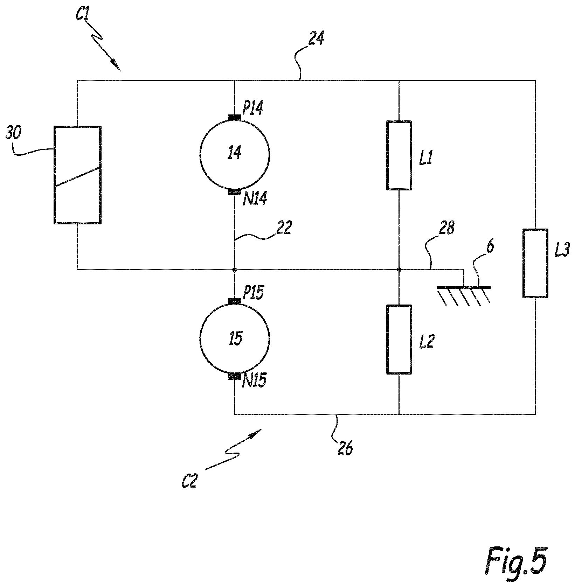

- figure 5 is a circuit diagram of the electric power supply of figure 2 according to a third embodiment of the invention.

### DETAILED DESCRIPTION OF SOME EMBODIMENTS

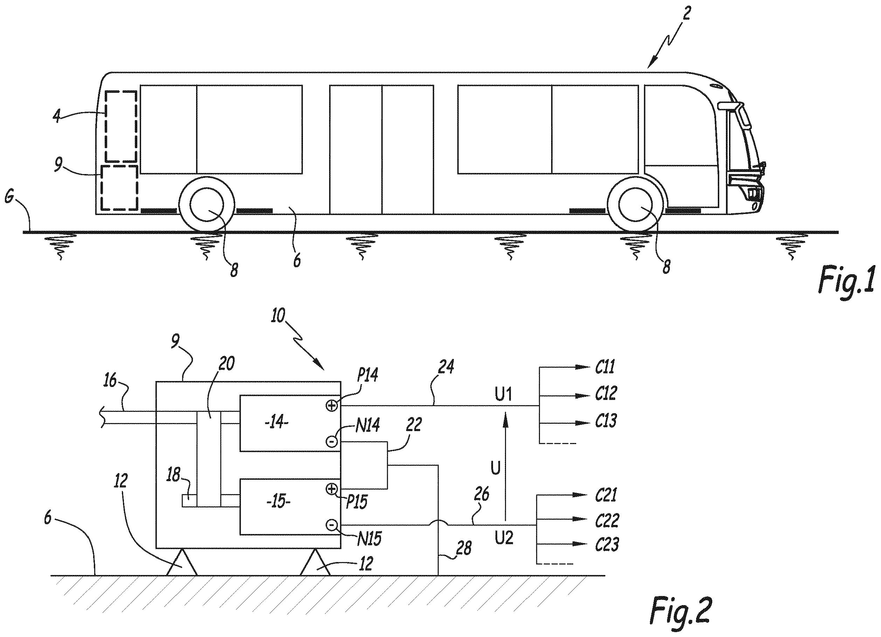

The bus 2 represented on figure 1 includes an internal combustion engine 4 mounted on a chassis 6 which is supported with respect to the ground G by several wheels 8, two of these wheels 8 being visible on figure 1. The bus 2 includes, next to engine 4, an electric network unit 9. The unit 9 is mounted on the chassis 6 by means of an isolating support 12.

The vehicle chassis 6 is electrically connected to the ground G by the wheels 8. Therefore the chassis 6 represents the electric mass of the bus 2, in other words, the chassis 6 represents the zero voltage reference.

The electric network unit 9 is electrically isolated from the bus chassis 6, that is, no electric current flows from the unit 9 to the ground G. The unit 9 holds an electric power supply circuit 10. The circuit 10 is provided with a first alternator 14 and a second alternator 15. The first alternator 14 is driven by a motor driven shaft 16 of the engine 4 of the bus 2. The motor driven shaft 16 rotates at a frequency F1 which depends on the speed of the engine 4. The second alternator 15 is provided with a driven shaft 18. A set of pulleys is mounted between the motor driven shaft 16 and the driven shaft 18 of the second alternator 15 in order to drive the second alternator 15 at a frequency which is different from the frequency F1.

The first alternator 14 is provided with a positive pole P14 and a negative pole N14. Between the positive pole P14 and the negative pole N14, the first alternator 14 generates a voltage U1, such as a 24 volts electrical potential difference. In the same way, the second alternator 15 is provided with a positive pole P15 and a negative pole N15. Between the positive pole P15 and the negative pole N15, the second alternator 15 generates a voltage U2, such as a 24 volts electrical potential difference.

The negative pole N14 of the first alternator 14 is electrically connected to the positive pole of P15 of the second alternator 15 by an electric link 22.

The positive pole P14 of the first alternator 14 is connected to a first electric line 24. A first electric load L1 is also connected to the electrical line 24. The first electric load L1 consists of some auxiliary load circuits. These auxiliary load circuits include, amongst others, a light circuit C11, a signal circuit C12, a windows wiper circuit C13, etc.

The negative pole N15 of the second alternator 15 is connected to a second electric line 26. A second electric load L2 is also connected to the electric line 26. The second electric load L2 consists of some auxiliary loads circuit. These auxiliary load circuits include, amongst others, an air conditioning circuit C21, an airing circuit C22, a heating circuit C23, etc.

The auxiliary circuits C11, C12 and C13 are also named servitude circuits since their functions are compulsory in the transportation vehicle field. The auxiliary circuits C21, C22 and C23 are also named secondary auxiliary circuits since their functions are important but not compulsory for a transportation vehicle.

In this way, the alternators 14 and 15 are connected in series between the first electric line 24 and the second electric line 26, thanks to the electric link 22. Moreover, an electric wire 28 connects the electric link 22 to the chassis 6 of the bus 2, in other words, the electric link 22 is connected to the electric mass.

Therefore, according to the electrical connection described above, the positive voltage U1, such as a 24 volts positive potential difference, is present between the first electric line 24 and the electric link 22. The negative voltage U2, such as a 24 volts negative potential difference, is present between the second electric line 26 and the electric link 22. Then, a voltage U is present between the first line 24 and the second line 26. According to the electrical connection described above, the voltage U is present as well between the negative pole N15 of the second alternator 15 and the positive pole P14 of the first alternator 14. The voltage U is the difference between the positive voltage U1 of the first line 24 and the negative voltage U2 of the second line 26. In other words, between the first electric line 24 and the second electric line 26, there is a 48 volts electric potential difference.

The electric power supply circuit 10 is provided with a battery set 30. The battery set 30 is connected in parallel with the first alternator 14.

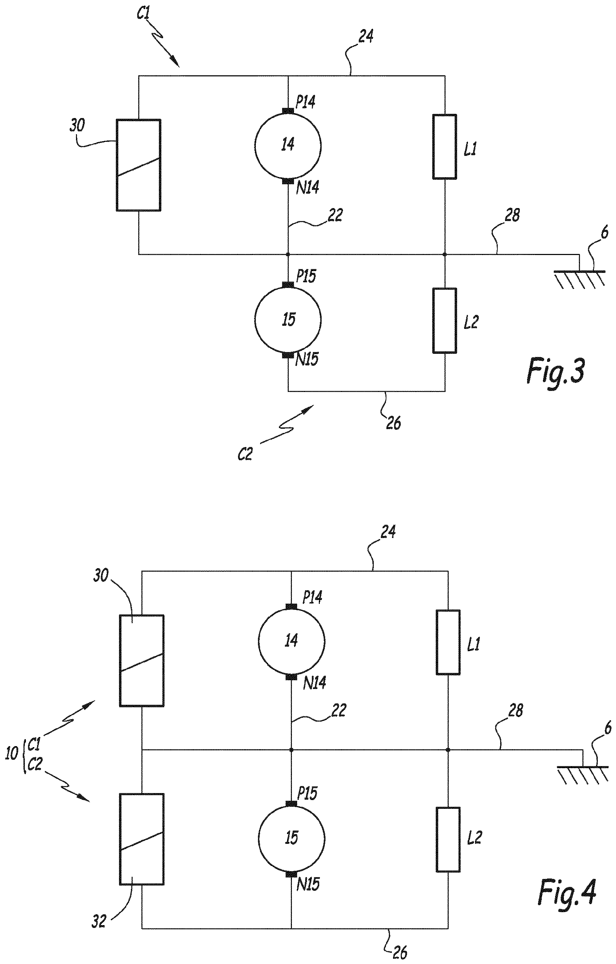

According to a second embodiment of the invention, which is represented at figure 4, the electric power supply circuit 10 is equipped with two battery sets 30 and 32: the first battery set 30 is connected in parallel with the first alternator 14 and the second battery set 32 is connected in parallel with the second alternator 15.

The electrical connection, described above, of the electric power supply circuit 10 defines a first alimentation circuit C1 and second alimentation circuit C2. The two alimentation circuits C1 and C2 are de facto separated.

The first alimentation circuit C1 consists of the battery set 30, the first alternator 14 and the first electric load L1, which contains the auxiliary load circuits C11, C12 and C13. The first alternator 14 supplies electric power to the first electric load L1. Since the auxiliary load circuits C11, C12, C13 of the first electric load L1 are compulsory, the presence of the battery set 30 is necessary so that, if the first electric load L1 requests a higher electric power than the one supplied by the first alternator 14, the battery set 30 supplies the request of the exceeding electric power.

The second alimentation circuit C2 of the electric power supply circuit 10 consists of the second alternator 15 and the second electric load L2. According to the first embodiment of the invention, since the second electric load L2 is not compulsory, no battery set is provided for the second alimentation circuit C2.

According to the second embodiment of the invention, the second alimentation circuit C2 is provided with the battery set 32 which is connected in parallel with the second alternator 15 so that, if the second electric load L2 requests a higher electric power than the one supplied by the second alternator 15, the battery set 32 supplies the request of the exceeding electric power.

According to a third embodiment of the invention, a third electric load L3 is connected between the first electric line 24 and the second electric line 26. Therefore, the third electric load L3 is supplied by the voltage U generated by the two alternators 14 and 15.

## Claims

1. Vehicle (2) comprising an engine (4), an electric power supply circuit (10) and a chassis (6), the chassis representing the electric mass of the vehicle, the electric power supply circuit (10) including:
- at least a first alternator (14) and a second alternator (15),
- at least one battery set (30; 30, 32),
- at least two electric loads (L1, L2),
the alternators (14, 15) being connected in series by an electric link (22) between the negative pole (N14) of the first alternator and the positive pole (P15) of the second alternator,
the vehicle chassis (6) being electrically connected to the electric link,
the positive pole (P14) of the first alternator being connected to the first electric load (L1),
the negative pole (N15) of the second alternator being connected to the second electric load (L2);
**characterized in that**
said first alternator (14) is configured to be driven by a motor driven shaft (16) of the engine (4) such that the motor driven shaft (16) rotates at a first frequency (F1) depending on a speed of the engine (4) and **in that** a set of pulleys is mounted between the motor driven shaft (16) and a driven shaft (18) of the second alternator (15) in order to drive the second alternator (15) at a frequency different from said first frequency (F1).

2. Vehicle according to claim 1, **characterized in that** said series of alternators is configured to generate an electric voltage (U) between the negative pole (N15) of the second alternator (15) and the positive pole (P14) of the first alternator (14), so that said electric voltage (U) is the difference of the single electric voltages (U1, U2) respectively produced by the two alternators.

3. Vehicle according to any one of the preceding claims, **characterized in that** each alternator (14, 15) is configured to supply an electrical power to the electric load (L1, L2) to which it is connected.

4. Vehicle according to any one of the preceding claims, **characterized in that** each alternator (14, 15) is a 24 volt type.

5. Vehicle according to any one of the preceding claims, **characterized in that** the electric power supply circuit (10) is located in an electric network unit (9).

6. Vehicle according to claim 5, **characterized in that** the electric network unit (9) is mounted on the chassis (6) by means of an isolating support (12).

7. Vehicle according to any one of the preceding claims, **characterized in that** the first electric load (L1) includes one or more auxiliary load circuits such as a light circuit (C11), a turn signal circuit (C12), a windows wiper circuit (C13).

8. Vehicle according to any one of the preceding claims, **characterized in that** the second electric load (L2) includes one or more auxiliary load circuits such as an air conditioning circuit (C21), an airing circuit (C22), a heating circuit (C23).

9. Vehicle according to any one of the preceding claims, **characterized in that** the electric power supply circuit (10) is equipped with two battery sets (30, 32).

10. A vehicle according to any of previous claims from 1 to 9, **characterized in that** the vehicle (2) is a public transportation vehicle, such as a bus.

## Patentansprüche

1. Ein Fahrzeug (2), umfassend einen Motor (4), einen Stromversorgungskreis (10) und ein Chassis (6), wobei das Chassis die elektrische Masse des Fahrzeugs darstellt, wobei der Stromversorgungskreis (10) umfasst:
- mindestens einen ersten Generator (14) und einen zweiten Generator (15),
- mindestens einen Batteriesatz (30; 30, 32),
- mindestens zwei elektrische Lasten (L1, L2),
wobei die Generatoren (14, 15) durch eine elektrische Verbindung (22) zwischen dem Minuspol (N14) des ersten Generators und dem Pluspol (P15) des zweiten Generators in Serie geschaltet sind,
wobei das Chassis (6) elektrisch mit der elektrischen Verbindung verbunden ist,
wobei der Pluspol (P14) des ersten Generators an die erste elektrische Last (L1) angeschlossen ist,
wobei der Minuspol (N15) des zweiten Generators an die zweite elektrische Last (L2) angeschlossen ist;
**dadurch gekennzeichnet, dass** der erste Generator (14) ausgeführt ist, um durch eine motorgetriebene Welle (16) des Motors (4) angetrieben zu werden, derart, dass die motorgetriebene Welle (16) in einer ersten Frequenz (F1) rotiert, abhängend von einer Drehzahl des Motors (4), und dass eine Reihe von Riemenscheiben zwischen der motorgetriebenen Welle (16) und einer Abtriebswelle (18) des zweiten Generators (15) angebracht ist, um den zweiten Generator (15) mit einer Frequenz anzutreiben, welche sich von der ersten Frequenz (F1) unterscheidet.

2. Ein Fahrzeug nach Anspruch 1, **dadurch gekennzeichnet, dass** die Reihe von Generatoren ausgeführt ist, um eine elektrische Spannung (U) zwischen dem Minuspol (N15) des zweiten Generators (15) und dem Pluspol (P14) des ersten Generators (14) zu erzeugen, derart, dass die elektrische Spannung (U) die Differenz zwischen den zwei einzelnen elektrischen Spannungen (U1, U2) ist, welche jeweils von den zwei Generatoren erzeugt werden.

3. Fahrzeug nach einem der vorstehenden Ansprüche, **dadurch gekennzeichnet, dass** jeder der Generatoren (14, 15) ausgeführt ist, um die elektrische Last (L1, L2), mit welcher er verbunden ist, mit elektrischer Energie zu versorgen.

4. Fahrzeug nach einem der vorstehenden Ansprüche, **dadurch gekennzeichnet, dass** jeder der Generatoren (14, 15) von einem 24-Volt-Typ ist.

5. Fahrzeug nach einem der vorstehenden Ansprüche, **dadurch gekennzeichnet, dass** der elektrische Stromversorgungskreis (10) in einer elektrischen Netzwerkeinheit (9) angeordnet ist.

6. Fahrzeug nach Anspruch 5, **dadurch gekennzeichnet, dass** die elektrische Netzwerkeinheit (9) mittels eines isolierenden Trägers (12) am Chassis (6) befestigt ist.

7. Fahrzeug nach einem der vorstehenden Ansprüche, **dadurch gekennzeichnet, dass** die erste elektrische Last (L1) einen oder mehrere Hilfslastkreise, wie etwa einen Lichtstromkreis (C11), einen Blinkerstromkreis (C12), einen Scheibenwischerstromkreis (C13), umfasst.

8. Fahrzeug nach einem der vorstehenden Ansprüche, **dadurch gekennzeichnet, dass** die zweite elektrische Last (L2) einen oder mehrere Hilfslastkreise, wie etwa einen Klimaanlagenstromkreis (C21), einen Lüftungsstromkreis (C22), einen Heizstromkreis (C23), umfasst.

9. Fahrzeug nach einem der vorstehenden Ansprüche, **dadurch gekennzeichnet, dass** der elektrische Stromversorgungskreis (10) mit zwei Batteriesätzen (30, 32) ausgestattet ist.

10. Ein Fahrzeug nach einem der vorstehenden Ansprüche 1 bis 9, **dadurch gekennzeichnet, dass** das Fahrzeug (2) ein öffentliches Verkehrsmittel, wie etwa ein Bus, ist.

## Revendications

1. Véhicule (2) comprenant un moteur (4), un circuit d'alimentation en électricité (10) et un châssis (6), le châssis représentant la masse électrique du véhicule, le circuit d'alimentation en électricité (10) incluant :
- au moins un premier alternateur (14) et un second alternateur (15),
- au moins un jeu de batteries (30 ; 30, 32),
- au moins deux charges électriques (L1, L2),
les alternateurs (14, 15) étant connectés en série par une liaison électrique (22) entre le pôle négatif (N14) du premier alternateur et le pôle positif (P15) du second alternateur,
le châssis de véhicule (6) étant connecté électriquement à la liaison électrique,
le pôle positif (P14) du premier alternateur étant connecté à la première charge électrique (L1),
le pôle négatif (N15) du second alternateur étant connecté à la seconde charge électrique (L2) ;
**caractérisé en ce que**
ledit premier alternateur (14) est configuré pour être entraîné par un arbre (16) entraîné par un moteur du moteur (4) de sorte que l'arbre (16) entraîné par un moteur tourne à une première fréquence (F1) en fonction d'une vitesse du moteur (4) et **en ce qu'**un jeu de poulies est monté entre l'arbre (16) entraîné par un moteur et un arbre entraîné (18) du second alternateur (15) afin d'entraîner le second alternateur (15) à une fréquence différente de ladite première fréquence (F1).

2. Véhicule selon la revendication 1, **caractérisé en ce que** ladite série d'alternateurs est configurée pour générer une tension électrique (U) entre le pôle négatif (N15) du second alternateur (15) et le pôle positif (P14) du premier alternateur (14), de sorte que ladite tension électrique (U) soit la différence des tensions électriques uniques (U1, U2) produites respectivement par les deux alternateurs.

3. Véhicule selon l'une quelconque des revendications précédentes, **caractérisé en ce que** chaque alternateur (14, 15) est configuré pour alimenter en électricité la charge électrique (L1, L2) à laquelle il est connecté.

4. Véhicule selon l'une quelconque des revendications précédentes, **caractérisé en ce que** chaque alternateur (14, 15) est d'un type 24 volts.

5. Véhicule selon l'une quelconque des revendications précédentes, **caractérisé en ce que** le circuit d'alimentation en électricité (10) est situé dans une unité de réseau électrique (9).

6. Véhicule selon la revendication 5, **caractérisé en ce que** l'unité de réseau électrique (9) est montée sur le châssis (6) au moyen d'un support isolant (12).

7. Véhicule selon l'une quelconque des revendications précédentes, **caractérisé en ce que** la première charge électrique (L1) inclut un ou plusieurs circuits de charge auxiliaire tels qu'un circuit de feu (C11), un circuit de clignotant (C12), un circuit d'essuie-glace (C13).

8. Véhicule selon l'une quelconque des revendications précédentes, **caractérisé en ce que** la seconde charge électrique (L2) inclut un ou plusieurs circuits de charge auxiliaire tels qu'un circuit de climatisation (C21), un circuit d'aération (C22), un circuit de chauffage (C23).

9. Véhicule selon l'une quelconque des revendications précédentes, **caractérisé en ce que** le circuit d'alimentation en électricité (10) est équipé de deux jeux de batteries (30, 32).

10. Véhicule selon l'une quelconque des revendications précédentes 1 à 9, **caractérisé en ce que** le véhicule (2) est un véhicule de transport en commun, tel qu'un bus.
